# EUROPEAN PATENT SPECIFICATION

(11) **EP 3 268 377 B1**
(45) Date of publication and mention of the grant of the patent: **02.01.2019**
(21) Application number: 16709606.4
(22) Date of filing: 08.03.2016
(51) Int. Cl.: C07F 11/00, C08G 61/08, C08F 10/00

(54) **METAL COMPLEXES AND A PROCESS OF PREPARING THEM**
METALLKOMPLEXE UND VERFAHREN ZUR HERSTELLUNG DAVON
COMPLEXES MÉTALLIQUES ET LEUR PROCÉDÉ DE PRÉPARATION.

(30) Priority: 09.03.2015 GB 201503926
(43) Date of publication of application: 17.01.2018
(73) Proprietor: XiMo AG, 6048 Horw/Lucerne (CH)
(72) Inventor: FRÁTER, Georg, 9642 Ebnat Kappel (CH); GULYÁS, Henrik, 1034 Budapest (HU); ONDI, Levente, 2112 Veresegyház (HU)
(74) Representative: Wallinger Ricker Schlotter Tostmann
(86) International application number: PCT/IB2016/051295
(87) International publication number: WO 2016/142849

(56) References cited:
- DE-A1-102011 012 629
- HYANGSOO JEONG ET AL: "Syntheses of Tungsten tert -Butylimido and Adamantylimido Alkylidene Complexes Employing Pyridinium Chloride As the Acid", ORGANOMETALLICS, vol. 31, no. 18, 24 September 2012 (2012-09-24), pages 6522-6525, XP055263092, US ISSN: 0276-7333, DOI: 10.1021/om300799q
- J Heppekausen: "Effiziente Silyloxy-basierte Katalysatoren für die Alkin-Metathese. Stabilisierung von Metathese-Katalysatoren", Dissertation, 1 January 2012 (2012-01-01), pages 1-304, XP055262307, TU Dortmund Retrieved from the Internet: URL:https://eldorado.tu-dortmund.de/bitstr eam/2003/29751/1/Dissertation.pdf [retrieved on 2016-04-04]
- Dmitry V. Peryshkov ET AL: "Synthesis of Tungsten Oxo Alkylidene Complexes", Organometallics, vol. 31, no. 20, 2 October 2012 (2012-10-02), pages 7278-7286, XP055285062, US ISSN: 0276-7333, DOI: 10.1021/om3008579
- Alejandro G. Lichtscheidl ET AL: "Bipyridine Adducts of Molybdenum Imido Alkylidene and Imido Alkylidyne Complexes", Organometallics, vol. 31, no. 12, 25 June 2012 (2012-06-25) , pages 4558-4564, XP055263094, US ISSN: 0276-7333, DOI: 10.1021/om300353e

## Description

This disclosure relates to metal complexes and to a process of preparing them.

Complexes of molybdenum and tungsten have been used as catalysts for certain chemical reactions, including olefin synthesis. They have the advantage of performing at least as well as ruthenium catalysts while being considerably cheaper (a function of the relative abundance of tungsten and molybdenum). A typical example of such a catalyst is the so-called Schrock catalyst, a typical example of which is shown below:

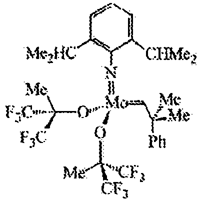

A more recent development is described in Angew. Chem. lnt.Ed. 2011, 50,8829-7832, and in PCT published application WO 2012/116695. The metal complex has the Formula (I): 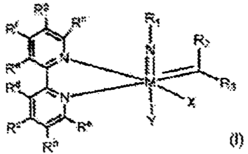 in which M is W or Mo and X and Y are the same or different.

Hyangsoo Jeong et al: "Syntheses of Tungsten tert.-Butylimido and Adamantylimido Alkylidene Complexes Employing Pyridinium Chloride as the Acid", Organometallics, vol. 31, no. 18, 24 September 2012 (2012-09-24), pages 6522-6525, discloses routes to tungsten alkylidene complexes that contain *tert*-butylimido or adamantylimido ligands that begin with a reaction between WCl₆ and 4 equivalents of HNR(trimethyl silane) to give [W(NR)₂Cl(µ-Cl)(RNH₂)]₂ (R = t-Bu or 1-adamantyl). Alkylation leads to W(NR)₂(CH₂R')₂ (R' = t-Bu or CMe₂Ph), which upon treatment with pyridinium chloride yields W(NR)(CHR')Cl₂(py)₂ complexes, from which W(NR)(CHR')(pyrrolide)₂ and two W(N-t-Bu)(CHR')(pyrrolide)(OAr) complexes (OAr = hexamethyl- or hexaisopropylterphenoxide) have been prepared.

J. Heppekausen: "Effiziente Silyloxy-basierende Katalysatoren für die Alkin-Metathese. Stabilisierung von Metathese-Katalysatoren", Dissertation, 1 January 2012 (2012-01-01), pages 1-304, TU Dortmund, discloses at page 98, last paragraph, page 111, paragraph 2, and page 112, lines 7 to 9 that 1,10-phenanthroline may be used for making the molybdenum alkylidene complexes disclosed in said document air-stable.

It has now been found that a particular compound not specifically described in any publication has particularly desirable properties. There is therefore provided a compound of the formula II 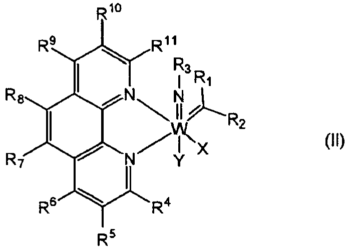 in which
X is substituted pyrrolide with the general structure of 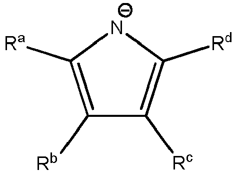
in which R^{a}- R^{d} are independently selected from H, C1-C4 alkyl, C1-C4 alkoxy, aryl, aryloxy, dialkylamino, diarylamino, halogen, trifluoromethyl, cyano, nitro, sulfonyl and sulfinyl;
Y is selected from C1-C6 alkoxy and C1-C10 aryloxy, both of which may be substituted with alkoxy, aryloxy, dialkylamino, diarylamino, halogen, trifluoromethyl, cyano, nitro, sulfonyl and sulfinyl R¹ is selected from H, C1-C12 alkyl and 5- to 18-membered aryl, both of which may be substituted with one or more of C1-C12-alkyl, 5-to 18-membered aryl, C1-C12-alkyloxy, di-(C1-C4-alkyl)amino, halogen, trifluoromethyl, cyano and nitro residues;
R² is selected from C1-C12-alkyl and 5- to 18-membered aryl, both of which may be substituted with one or more of C1-C12 alkyl, 5- to 18-membered aryl, C1-C12-alkyloxy, di(C1-C4alkyl)amino, halogen, trifluoromethyl, cyano, nitro residues;
R³ is selected from C1-C12 alkyl and 5- to 18-membered aryl, both of which may be substituted with one or more of C1-C12 alkyl, 5- to 18-membered aryl, C1-C12-alkoxy, di(C1-C4-alkyl)amino, halogen, trifluoromethyl, cyano and nitro residues; and,
R⁴-R¹¹ are independently selected from H, C1-C4 alkyl and halogen; and
W is selected from Mo and W.

In this description, wherever the terms are used, "alkyl" and "alkoxy" encompass instances in which the alkyl entity is linear, branched or cycloalkyl, and "aryl" encompasses heteroaryl entities.

In a particular embodiment:
- in X, R^{b} and R^{c} are H, and R^{a} and R^{d} are independently selected from H, methyl and phenyl;
- R¹ and R² are selected from H, C1-C5 alkyl and 5- to 10-membered aryl, which may be substituted with one or more of C1-C4-alkyl, halogen and trifluoromethyl, with the proviso that only one of R¹ and R² can be H;
- R³ is selected from C1-C5 alkyl and 5- to 10-membered aryl, both of which may be substituted with one or more of C1-C4 alkyl, 5- to 10-membered aryl and C1-C4-alkoxy,
- R⁴-R¹¹ are independently selected from H, C1-C4 alkyl and halogen.

In a further particular embodiment:
- in X, R^{b} and R^{c} are H, and R^{a} and R^{d} are both methyl or both phenyl;
- R¹ and R² are selected such that one of them is H and the other is selected from C1-C5 alkyl and 5- to 10-membered aryl, which may be substituted with one or more of C1-C4-alkyl, halogen and trifluoromethyl;
- R³ is selected from C1-C5 alkyl and 5- to 10-membered aryl, which may be substituted with one or more of C1-C4 alkyl, 5- to 10-membered aryl, C1-C4-alkoxy, halogen, and trifluoromethyl;
- R⁴-R¹¹ are hydrogen.

In particular embodiments, the compound hereinabove described is selected from compounds of the Formulae III, IV, V and VI: 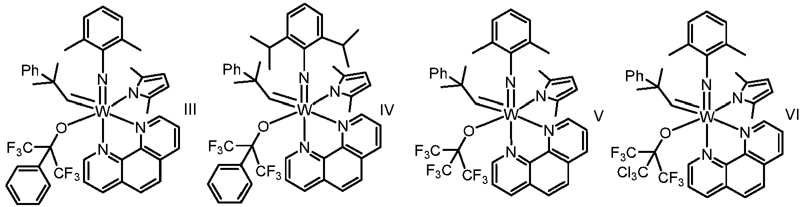 , more particularly the compounds of the Formulae III, IV and V

The compounds of Formula II may be made according to the following general scheme:

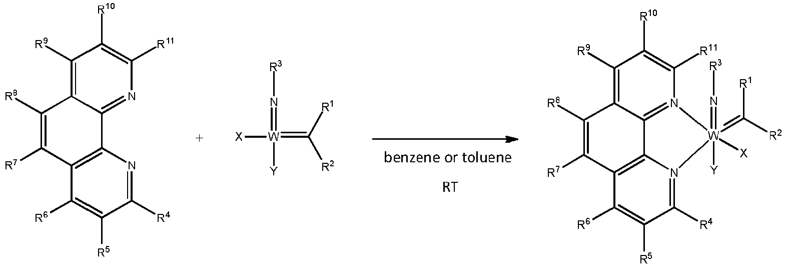

In particular, the compound of Formula III is made according to the following scheme:

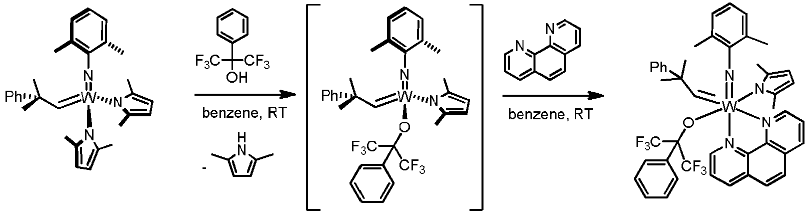

The starting materials for the preparation of the compounds according to Formula II may be easily prepared according to known methods. Such methods may be found, for example in the paper of Jiang et al (J. Am. Chem. Soc. 2009, 131, 16630-16631).

These compounds have been found to be particularly useful in the catalysis of ring-opening metathesis polymerisation reactions, particularly of dicyclopentadiene. The resulting polydicyclopentadiene has a structure of unusual and desirable stereoregularity. There is therefore also provided the use of a compound of the Formula (II) as hereinabove defined in the preparation of a polymer of dicyclopentadiene.

The catalysts are generated *in situ from* the compounds of Formula II by art-recognised methods, such as the addition of Lewis acids, typically zinc chloride.

Poly(dicyclopentadiene) (PDCPD) made utilising the compounds hereinabove described is distinguished by having a particularly high cis-content. In the corresponding hydrogenated PDCPD the ratio of racemo diads is at least 75%, and in many cases can exceed 90%, and they are syndiotactic. This stereoregularity provides the hydrogenated PDCPD with a high degree of crystallinity, which in turn confers excellent physical properties, such as high melting point, improved impact resistance, corrosion resistance and heat resistance. PDCPD and hydrogenated PDCPD have a number of mechanical and optical uses.

In contrast, catalysts desribed in Angew. Chem. Int.Ed. 2011, 50, 8829-7832, and in PCT published application WO 2012/116695, yield PDCPD and hydrogenated PDCPD with low syndiotacticity. For instance, in the hydrogenated PDCPD prepared using Mo(CHCMe₂Ph)(NAr^{diiPr})(OCMe(CF₃)₂)₂(1,10-phenantroline) the ratio of racemo diads was found to be 39%, and it was not syndiotactic (iso-biased). DSC analysis of the hydrogenated PDCPD showed no melting point, suggesting that the polymer was amorphous. (Ar^{diiPr} = 2,6-diisopropylphenyl; the complex is an example described in Angew. Chem. Int.Ed. 2011, 50, 8829-7832, and in PCT published application WO 2012/116695.)

The measurement of the polymer parameters are typically performed by the following methods:

### (1) Number average molecular weight of dicyclopentadiene ring-opening polymer

The ratio of the number of hydrogen atoms present at the terminals of the polymer chain to the number of hydrogen atoms present in the polymer chain excluding the terminals was calculated based on the 1H-NMR measurement results, and the number average molecular weight of the dicyclopentadiene ring-opening polymer was calculated based on the calculated ratio.

### (2) Cis/trans content in dicyclopentadiene ring-opening polymer

The cis/trans content in the dicyclopentadiene ring-opening polymer was calculated based on the 1H-NMR measurement results.

### (3) Hydrogenation ratio of dicyclopentadiene ring-opening polymer during hydrogenation reaction

The hydrogenation ratio of the dicyclopentadiene ring-opening polymer during the hydrogenation reaction was calculated based on the 1H-NMR measurement results.

### (4) Thermal behaviour of hydrogenated syndiotactic crystalline dicyclopentadiene ring-opening polymer

The thermal behaviour of the hydrogenated dicyclopentadiene ring-opening polymer was measured using a differential scanning calorimeter (DSC) at a temperature increase rate of 10°C/min.

### (5) Ratio of racemo diads in hydrogenated dicyclopentadiene ring-opening polymer

The hydrogenated dicyclopentadiene ring-opening polymer was subjected to 13C-NMR measurement at 200°C using o-dichlorobenzene-d4/trichlorobenzene (1/2 wt/wt) as a solvent, and the ratio of racemo diads was determined based on the intensity ratio of the signal at 43.35 ppm attributed to meso diads to the signal at 43.43 ppm attributed to racemo diads.

The disclosure is further described with reference to the following non-limiting examples.

### Example 1

### Preparation of the compound of Formula III

The bispyrrolide precursor W(CHCMe₂Ph)(NAr^{diMe})(Me₂Pyr)₂ (Ar^{diMe} = 2,6-dimethylphenyl, Me₂Pyr = 2,5-dimethylpyrrolide) (312 mg, 0.5 mmol) was dissolved in benzene (5 mL). Ph(CF₃)₂COH (84 microL, 0.5 mmol) was added, and the reaction mixture was stirred for 30 min at room temperature. An aliquot of the reaction mixture was analyzed by ¹H NMR and ¹⁹F NMR to confirm the formation of the MAP complex. 1,10-Phenantroline (90 mg, 0.5 mmol) was added. The reaction mixture was stirred for an hour at room temperature, and then it was moved into the freezer. Next morning the reaction mixture was thawed, yielding part of the product as orange crystals. Precipitation of the product was completed by slow, gradual addition of pentane (10 mL in total). The reaction mixture and a glass filter were cooled in the freezer, and the product was isolated by rapid filtration. It was washed with pentane on the frit, and dried in N₂ stream. Orange solid. Isolated yield: 480 mg (quantitative).

¹H-NMR (CeDe): 0.72 (s, 3H, N-Ar CH₃), 1.77 (s, 3H, CH₃ neophylidene), 1.99 (s, 3H, CH₃ neophylidene), 2.44 (s, 3H, CH₃ 2,5-dimethylpyrrole), 2.53 (s, 3H, N-Ar CH₃), 2.67 (s, 3H, CH₃ 2,5-dimethylpyrrole), 6.45 (d, ³*J*_{HH} = 7.5 Hz 1H, N-Ar Cₘₑₜₐ-H), 6.54 (dd, ³*J*_{HH} =8.1, 5.0 Hz, 1H, H8-phen), 6.61 (t, ³*J*_{HH} = 7.5 Hz, 1H, N-Ar Cₚₐᵣₐ-H), 6.65 (d, 1H, CH 2,5-dimethylpyrrole),), 6.67 (dd, ³*J*_{HH} =8.1, 5.2 Hz, 1H, H3-phen), 6.77 (d, 1H, CH 2,5-dimethylpyrrole), 6.93 (d,³*J*_{HH} = 7.5 Hz 1H, N-Ar Cₘₑₜₐ-H), 6.99 (d, 1H, H5-phen), 7.00 (d, 1H, H6-phen), 7.15 (m, 2H, neophylidene Ph Cₚₐᵣₐ-H (C₆F₅)₂CH₃CO Cₚₐᵣₐ-H), 7.17 (m, 1H, H7-phen) 7.29 (m, 4H, neophylidene Ph Cₘₑₜₐ-H, (C₆F₅)₂CH₃CO Cₘₑₜₐ-H), 7.36 (m, 1H, H4-phen), 7.70 (m, 4H, neophylidene Ph Cₒᵣₜₒ-H (C₆F₅)₂CH₃CO Cₒᵣₜₒ-H), 8.77 (d, ³*J*_{HH} = 5.0 Hz, 1H, H2- phen), 9.61 (dd, ³*J*_{HH} = 5.2 Hz, ⁴*J*_{HH} = 1.5 Hz, 1H, H9-phen), 11.99 ppm (s, 1H, W=CH,²*J*_{WH}=10.0 Hz).
¹⁹F-NMR (C₆D₆): -72.9 (q), -74.6 ppm (q).
¹³C{¹H}-NMR (C₆D₆): 17.6 (N-Ar CH₃), 18.3 (N-Ar CH₃), 20.2 (CH₃ 2,5-dimethylpyrrole), 30.1 (CH₃ neophylidene), 34.8 (CH₃ neophylidene), 108.6 (CH 2,5-dimethylpyrrole), 109.9 (CH 2,5-dimethylpyrrole),123.7 (C3-phen), 124.0 (C8-phen), 124.1 (N-ArCₚₐᵣₐ), 125.2 (C6-phen), 126.4 (N-ArCₘₑₜₐ), 128.7 (N-ArCₘₑₜₐ) 137.0 (C7-phen), 138.1 (C4-phen), 152.7 (C2-phen), 160.0 ppm (C9-phen).

### Example 2

### Preparation of the compound of Formula IV

The bispyrrolide precursor W(CHCMe₂Ph)(NAr^{diiPr})(Me₂Pyr)₂ (Ar^{diiPr} = 2,6-diisopropylphenyl, Me₂Pyr = 2,5-dimethylpyrrolide) (680 mg, 1 mmol) was dissolved in benzene (10 mL). Ph(CF₃)₂COH (170 microL, 1 mmol) was added, and the reaction mixture was stirred for an hour at room temperature. An aliquot of the reaction mixture was analyzed by ¹H and ¹⁹F NMR, which confirmed the formation of the MAP complex. 1,10-Phenantroline (180 mg, 1 mmol) was added. The reaction mixture was stirred for an hour at room temperature. An aliquot was analyzed by ¹H and ¹⁹F NMR. Both methods confirmed the formation of one single stereoisomer of the target compound. The compound was spectroscopically pure. The solution of the complex was concentrated to ca. 3-4 mL. Pentane was added to room temperature. Precipitation of the target compound started after adding ca. 15 mL pentane. Some more pentane (ca. 10 mL) was added to complete precipitation. The mixture was stirred for an hour. The solids were isolated by filtration, washed with pentane, and dried first in N₂ stream, and then in vacuum. Ocher
solid. Yield: 936 mg (93%). The product was prepared from the isolated MAP complex, too, with similar yields.

¹H-NMR (CeDe): -0.20 (d,³*J*_{HH} = 6.9Hz, 6H, CH₃CHCH₃), 0.12 (d, ³*J*_{HH} = 6.9 Hz, 6H, CH₃CHCH₃), 1.22 (d, ³*J*_{HH} = 6.7 Hz, 6H, CH₃CHCH₃), 1.41 (d, ³*J*_{HH} = 6.7 Hz, 6H, CH₃CHCH₃), 1.89 (s, 3H, CH₃ neophylidene), 2.20 (sept, ³*J*_{HH} = 6.9 Hz, 1H, CH₃CHCH₃), 2.24 (s, 3H, CH₃ neophylidene), 2.36 (s, 3H, CH₃ 2,5-dimethylpyrrole), 2.74 (s, 3H, CH₃ 2,5-dimethylpyrrole), 4.25 (sept, ³*J*_{HH} = 6.7 Hz, 1H, CH₃CHCH₃), 6.51 (dd, ³*J*_{HH} =8.1, 5.0 Hz, 1H, H8-phen), 6.63 (d, ³*J*_{HH} = 2.7 Hz, 1H, CH 2,5-dimethylpyrrole), 6.63 (dd, ³*J*_{HH} =8.1, 5.2 Hz, 1H, H3-phen), 6.65 (d, ³*J*_{HH} = 7.7 Hz 1H, N-Ar Cₘₑₜₐ-H), 6.69 (d, ³*J*_{HH} = 2.7 Hz, 1H, CH 2,5-dimethylpyrrole), ), 6.82 (t, ³*J*_{HH} = 7.7 Hz, 1H, N-Ar Cₚₐᵣₐ-H), 7.00 (ABd, 2H, H5-phen, H6-phen), 7.14-7.20 (m, 2H, neophylidene Ph Cₚₐᵣₐ-H, OCPh(CF₃)₂ Cₚₐᵣₐ-H), 7.15 (d, ³*J*_{HH} = 7.7 Hz 1H, N-Ar Cₘₑₜₐ-H), 7.17 (m, 1H, H7-phen), 7.29 (m, 2H, OCPh(CF₃)₂ Cₘₑₜₐ-H), 7.34 (m, 1H, H4-phen), 7.37 (m, 2H, neophylidene Ph Cₘₑₜₐ-H), 7.60 (m, 2H, OCPh(CF₃)₂ Cₒᵣₜₒ-H), 7.81 (m, 4H, neophylidene Ph Cₒᵣₜₒ-H), 9.04 (d br,³*J*_{HH} = 5.1 Hz, 1H, H2- phen), 9.71 (dd, ³*J*_{HH} = 5.0 Hz, ⁴*J*_{HH} = 1.2 Hz, 1H, H9-phen), 12.20 ppm (s, 1H, W=CH, ²*J*_{WH}=9.5 Hz).
¹⁹F NMR (C₆D₆): -69.1 (q), -76.3 ppm (q br).

### Example 3

### Preparation of the compound of Formula V

The bispyrrolide precursor W(CHCMe₂Ph)(NAr^{diMe})(Me₂Pyr)₂ (Ar^{diMe} = 2,6-dimethylphenyl, Me₂Pyr = 2,5-dimethylpyrrolide) (156 mg, 0.25 mmol) was dissolved in toluene (10 mL). The solution was cooled to -38 Celsius in the freezer of the glove box. The solution was moved out of the glove box, and (CF₃)₃COH (35 microL, 0.25 mmol) was added immediately at intensive stirring. The reaction mixture was allowed to warm to room temperature, and and it was left stirring overnight. An aliquot of the reaction mixture was analyzed by ¹H and ¹⁹F NMR. The analysis confirmed the formation of the MAP complex, and also revealed the formation of a small amount of bisalkoxide (ca. 5 mol%). 1,10-phenantroline (45 mg, 0.25 mmol was added. The reaction mixture turned brownish red immediately. Phenantroline residues were washed into the reaction mixture with toluene (1 mL). The reaction mixture was stirred for an hour. An aliquot of the reaction mixture was analyzed by ¹H and ¹⁹F NMR. The analysis confirmed the formation of the phenantroline adduct of the MAP complex, and also revealed the formation of a small amount of the phenantroline adduct of the bisalkoxide (ca. 5 mol%). The reaction mixture was concentrated to 1-2 mL, and precipitation of the product was initiated by the slow addition of pentane (ca. 10 mL). The mixture was stirred for an hour at room temperature to triturate the product, and then the reaction mixture was moved into the freezer to complete the precipitation of the target compound. The product was isolated by filtration, and dried on the frit in N₂ stream. Red solid. Yield: 200 mg (85%). Purity > 95%.
¹H-NMR (C₆D₆) δ (ppm): 0.62 (s, 3H, CH₃), 1.82 (s, 3H, CH₃), 1.95 (s, 3H, CH₃), 2.19 (s, 3H, CH₃), 2.47 (s, 3H, CH₃), 3.16 (s, 3H, CH₃), 6.38-7.35 (m, 14H, aromatic), 7.69 (m, 2H, Cₒᵣₜₕₒ-H neophylidene), 8.60 (dd, J=5.2, 1.4 Hz, 1H, H2 Phen), 9.32 (d br, J=5.0 Hz, 1H, H2' Phen), 12.04 (s, ²*J*_{WH}=10.9 Hz, 1H, W=CH).
¹⁹F-NMR (CeDe) δ (ppm): -72.9 (s).

### Example 4

### Preparation of the compound of Formula VI

The compound of Formula VI was prepared from W(CHCMe₂Ph)(NAr^{diMe})(Me₂Pyr)₂ (Ar^{diMe} = 2,6-dimethylphenyl, Me₂Pyr = 2,5-dimethylpyrrolide) and (CCl₃)(CF₃)₂COH by the method of Example 3. Yield 83%.

¹H-NMR (C₆D₆): δ0.56 (s, 3H, N-Ar CH₃), 1.81 (s, 3H, CH₃ neophylidene), 1.93 (s, 3H, CH₃ neophylidene), 2.17(s, 3H, CH₃ Me₂Pyr), 2.43 (s, 3H, N-Ar CH₃), 3.17 (s, 3H, CH₃ Me₂Pyr), 6.40 (d br, ³*J*_{HH}=7.3 Hz, 1H, N-Ar Cₘₑₜₐ-H), 6.58 (m, 2H, H3-phen, N-Ar Cₚₐᵣₐ-H), 6.63 (m, 1H, CH Me₂Pyr), 6.66 (m, 1H, CH Me₂Pyr), 6.65 (m, 1H, H3'-phen), 6.86 (d br, ³*J*_{HH}=7.6 Hz, 1H, N-Ar Cₘₑₜₐ-H), 6.97 (ABq, 2H, H5-phen, H5'-phen), 7.13 (m, 1H, neophylidene Ph Cₚₐᵣₐ-H), 7.16 (m, 1H, H4'-phen), 7.31 (m, 3H, neophylidene Ph Cₘₑₜₐ-H, H4-phen), 7.68 (m, 2H, neophylidene Ph Cₒᵣₜₒ-H), 8.57 (dd, *J*_{HH} = 5.2, 1.1 Hz, 1H, H2- phen), 9.52 (d br, *J*_{HH} = 4.8 Hz, 1H, H2'-phen), 12.34 ppm (s, 1H, W=CH, ²*J*_{WH}=12.0 Hz).
¹⁹F-NMR (C₆D₆): δ-65.2 (q, ⁴*J*_{FF}=10.5 Hz), -68.0(q, ⁴*J*_{FF}=10.5Hz).
¹³C-NMR (C₆D₆): δ 16.7 (N-Ar CH₃), 19.0 (N-Ar CH₃), 20.6 (CH₃ Me₂Pyr), 21.2 (CH₃ Me₂Pyr) 30.2 (CH₃ neophylidene), 34.7 (CH₃ neophylidene), 55.1 (C neophylidene), 107.7 (CH Me₂Pyr), 110.8 (CH Me₂Pyr), 123.8 (C3-phen), 124.5 (C3'-phen), 124.9 (N-Ar Cₚₐᵣₐ), 125.5 (C5-phen), 126.0 (neophylidene Ph Cₚₐᵣₐ), 127.0 (N-Ar Cₘₑₜₐ), 126.9 (neophylidene Ph Cₒᵣₜₕₒ), 126.8 (C5'-phen), 128.3 (neophylidene Ph Cₘₑₜₐ), 128.7 (C4a'-phen, N-Ar Cₘₑₜₐ), 129.2 (C4a-phen), 133.7 (N-Ar Cₒᵣₜₕₒ), 137.6 (C4'-phen), 138.4 (C4-phen), 140.4 (N-Ar Cₒᵣₜₕₒ), 145.0 (C1a'-phen), 147.2 (C1a-phen), 153.5 (neophylidene Ph Cᵢₚₛₒ), 154.4 (N-ArCᵢₚₛₒ), 155.3 (C2'-phen), 160.1 (C2-phen), 287.4 ppm (W=CH).

### Example 5

A glass reactor equipped with a stirrer was charged with 0.072 g (1/500 mol/mol) of (2-trifluoromethyl-2-phenyl-1,1,1-trifluoroethoxy)2,6-dimethylphenylimidotungsten(VI)(2,5-dimethylpyrrolido)(neophylidene)(1,10-phenanthroline) obtained in Example 1, and 1 g of toluene. After the addition of 5.0 g of dicyclopentadiene, 20.0 g of cyclohexane, 0.21 g of 1-hexene, and a solution prepared by dissolving 0.0105 g of anhydrous zinc chloride in 5 g of 1,4-dioxane, a polymerization reaction was performed at 50°C. White turbidity due to 1,10-phenanthroline-zinc was observed immediately afterthe initiation of the polymerization reaction. After 3 hours had elapsed, a large quantity of acetone was poured into the reaction mixture to aggregate the precipitate, and the aggregate was filtered off, washed, and dried at 40°C for 24 hours under reduced pressure. The yield of the resulting ring-opening polymer was 4.3g, and the ring-opening polymer had a number average molecular weight of 14,000 and a cis content of 97%.

A glass reactor equipped with a stirrer was charged with 2.5 g of the resulting dicyclopentadiene ring-opening polymer and 21 g of p-toluenesulfonylhydrazide. After the addition of 500 ml of p-xylene, a hydrogenation reaction was performed at 125°C for 5 hours. The reaction mixture was poured into a large quantity of methanol to completely precipitate the resulting hydrogenated dicyclopentadiene ring-opening polymer, which was filtered off, washed, and dried at 40°C for 24 hours under reduced pressure. The hydrogenation ratio of the resulting hydrogenated ring-opening polymer was 99% or more, and the ratio of racemo diads in the hydrogenated ring-opening polymer was 92% and syndiotactic. DSC analysis of the obtained hydrogenated ring-opening polymer showed a melting point, suggesting its crystalline nature.

### Example 6

A glass reactor equipped with a stirrer was charged with 0.076 g (1/500 mol/mol) of (2-trifluoromethyl-2-phenyl-1,1,1-trifluoroethoxy)2,6-diisopropylphenylimidotungsten(VI)(2,5-dimethylpyrrolido)(neophylidene)(1,10-phenanthroline) obtained in Example 2, and 1 g of toluene. After the addition of 5.0 g of dicyclopentadiene, 20.0 g of cyclohexane, 0.21 g of 1-hexene, and a solution prepared by dissolving 0.0105 g of anhydrous zinc chloride in 5 g of 1,4-dioxane, a polymerization reaction was performed at 50°C. White turbidity due to 1,10-phenanthroline-zinc was observed immediately afterthe initiation of the polymerization reaction. After 3 hours had elapsed, a large quantity of acetone was poured into the reaction mixture to aggregate the precipitate, and the aggregate was filtered off, washed, and dried at 40oC for 24 hours under reduced pressure. The yield of the resulting ring-opening polymer was 4.4g, and the ring-opening polymer had a number average molecular weight of 10,900 and a cis content of 81%.

A glass reactor equipped with a stirrer was charged with 2.5 g of the resulting dicyclopentadiene ring-opening polymer and 21 g of p-toluenesulfonylhydrazide. After the addition of 500 ml of p-xylene, a hydrogenation reaction was performed at 125°C for 5 hours. The reaction mixture was poured into a large quantity of methanol to completely precipitate the resulting hydrogenated dicyclopentadiene ring-opening polymer, which was filtered off, washed, and dried at 40°C for 24 hours under reduced pressure. The hydrogenation ratio of the resulting hydrogenated ring-opening polymer was 99% or more, and the ratio of racemo diads in the hydrogenated ring-opening polymer was 78% and syndiotactic. DSC analysis of the obtained hydrogenated ring-opening polymer showed a melting point, suggesting its crystalline nature.

### Example 7

A glass reactor equipped with a stirrer was charged with 0.072 g (1/500 mol/mol) of (nonafluoro-*tert*-butyl alkoxy)2,6-dimethylphenylimidotungsten(VI)(2,5-dimethylpyrrolido)(neophylidene)(1,10-phenanthroline) obtained in Example 3, and 1 g of toluene. After the addition of 5.0 g of dicyclopentadiene, 20.0 g of cyclohexane, 0.21 g of 1-hexene, followed by a solution of 0.0105 g of anhydrous zinc chloride in 5 g of 1,4-dioxane, a polymerization reaction was performed at 50°C. White turbidity due to the presence of 1,10-phenanthroline-zinc was observed immediately afterthe initiation of the polymerization reaction. After 1 hour had elapsed, a large quantity of acetone was poured into the reaction mixture to aggregate the precipitate, and the aggregate was filtered off, washed, and dried at 40°C for 24 hours under reduced pressure. The yield of the resulting ring-opening polymer was 4.7 g, and the ring-opening polymer had a number average molecular weight of 5,500 and a cis content of 94 %.

A glass reactor equipped with a stirrer was charged with 2.5 g of the resulting dicyclopentadiene ring-opening polymer and 21 g of p-toluenesulfonylhydrazide. After the addition of 500 ml of p-xylene, a hydrogenation reaction was performed at 125°C for 5 hours. The reaction mixture was poured into a large quantity of methanol to completely precipitate the resulting hydrogenated dicyclopentadiene ring-opening polymer, which was filtered off, washed, and dried at 40°C for 24 hours under reduced pressure.

The hydrogenation ratio of the resulting hydrogenated ring-opening polymer was in excess of 99% and the ratio of racemo diads in the hydrogenated ring-opening polymer was 93 % and syndiotactic. DSC analysis of the obtained hydrogenated ring-opening polymer showed a melting point, suggesting its crystalline nature.

### Example 8

A glass reactor equipped with a stirrer was charged with 0.072 g (1/500 mol/mol) of Mo(CHCMe₂Ph)(NAr^{diiPr})(OCMe(CF₃)₂)₂(1,10-phenantroline), obtained as described in Angew. Chem. Int.Ed. 2011, 50, 8829-7832, and 1 g of toluene. After the addition of 5.0 g of dicyclopentadiene, 20.0 g of cyclohexane, 0.21 g of 1-hexene, followed by a solution of 0.0105 g of anhydrous zinc chloride in 5 g of 1,4-dioxane, a polymerization reaction was performed at 50°C. White turbidity due to the presence of 1,10-phenanthroline-zinc was observed immediately after the initiation of the polymerization reaction. After 1 hour had elapsed, a large quantity of acetone was poured into the reaction mixture to aggregate the precipitate, and the aggregate was filtered off, washed, and dried at 40°C for 24 hours under reduced pressure. The yield of the resulting ring-opening polymer was 4.6 g, and the ring-opening polymer had a number average molecular weight of 3,800 and a cis content of 66 %.

A glass reactor equipped with a stirrer was charged with 2.5 g of the resulting dicyclopentadiene ring-opening polymer and 21 g of p-toluenesulfonylhydrazide. After the addition of 500 ml of p-xylene, a hydrogenation reaction was performed at 125°C for 5 hours. The reaction mixture was poured into a large quantity of methanol to completely precipitate the resulting hydrogenated dicyclopentadiene ring-opening polymer, which was filtered off, washed, and dried at 40°C for 24 hours under reduced pressure.

The hydrogenation ratio of the resulting hydrogenated ring-opening polymer was 99% or more, and the ratio of racemo diads in the hydrogenated ring-opening polymerwas 39 % and not syndiotactic (iso-biased). DSC analysis of the obtained hydrogenated ring-opening polymer showed no melting point, suggesting its amorphous nature.

## Claims

1. A compound of the formula II 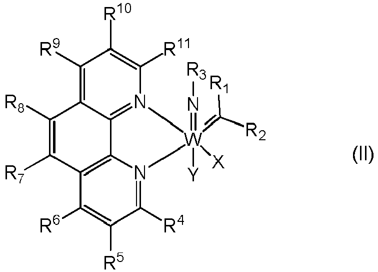 in which
X is substituted pyrrolide with the general structure of 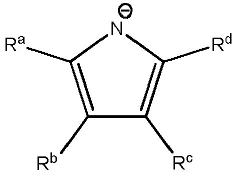
in which R^{a}- R^{d} are independently selected from H, C1-C4 alkyl, C1-C4 alkoxy, aryl, aryloxy, dialkylamino, diarylamino, halogen, trifluoromethyl, cyano, nitro, sulfonyl and sulfinyl;
Y is selected from C1-C6 alkoxy and C1-C10 aryloxy, both of which may be substituted with alkoxy, aryloxy, dialkylamino, diarylamino, halogen, trifluoromethyl, cyano, nitro, sulfonyl and sulfinyl
R¹ is selected from H, C1-C12 alkyl and 5- to 18-membered aryl, both of which may be substituted with one or more of C1-C12-alkyl, 5- to 18-membered aryl, C1-C12-alkyloxy, di-(C1-C4-alkyl)amino, halogen, trifluoromethyl, cyano and nitro residues;
R² is selected from C1-C12-alkyl and 5- to 18-membered aryl, both of which may be substituted with one or more of C1-C12 alkyl, 5- to 18-membered aryl, C1-C12-alkyloxy, di(C1-C4alkyl)amino, halogen, trifluoromethyl, cyano, nitro residues;
R³ is selected from C1-C12 alkyl and 5- to 18-membered aryl, both of which may be substituted with one or more of C1-C12 alkyl, 5- to 18-membered aryl, C1-C12-alkoxy, di(C1-C4-alkyl)amino, halogen, trifluoromethyl, cyano and nitro residues; and,
R⁴-R¹¹ are independently selected from H, C1-C4 alkyl and halogen,
wherein "alkyl" and "alkoxy" encompass instances in which the alkyl entity is linear, branched or cycloalkyl, and "aryl" encompasses heteroaryl entities.

2. A compound according to claim 1, in which:
- in X, R^{b} and R^{c} are H, and R^{a} and R^{d} are independently selected from H, methyl and phenyl;
- R¹ and R² are selected from H, C1-C5 alkyl and 5- to 10-membered aryl, which may be substituted with one or more of C1-C4-alkyl, halogen and trifluoromethyl, with the proviso that only one of R¹ and R² can be H;
- R³ is selected from C1-C5 alkyl and 5- to 10-membered aryl, both of which may be substituted with one or more of C1-C4 alkyl, 5- to 10-membered aryl and C1-C4-alkoxy; and
- R⁴-R¹¹ are independently selected from H, C1-C4 alkyl and halogen.

3. A compound according to claim 2, in which
- in X, R^{b} and R^{c} are H, and R^{a} and R^{d} are both methyl or both phenyl;
- R¹ and R² are selected such that one of them is H and the other is selected from C1-C5 alkyl and 5- to 10-membered aryl, which may be substituted with one or more of C1-C4-alkyl, halogen and trifluoromethyl;
- R³ is selected from C1-C5 alkyl and 5- to 10-membered aryl, which may be substituted with one or more of C1-C4 alkyl, 5- to 10-membered aryl, C1-C4-alkoxy, halogen, and trifluoromethyl;
- R⁴-R¹¹ are hydrogen.

4. A compound according to claim 1, selected from compounds of the Formulae III-VI:

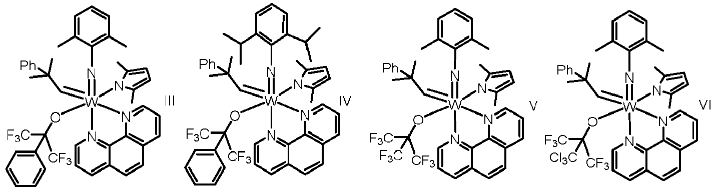

5. A compound according to claim 1, selected from the compounds of the Formulae III-V:

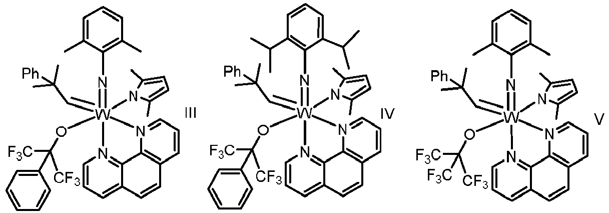

6. Use of a compound according to claim 1 in the preparation of a polymer of dicyclopentadiene.

## Patentansprüche

1. Verbindung der Formel II 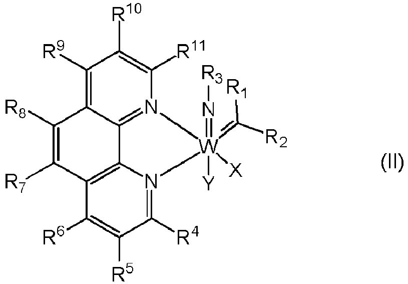 in welcher ist:
X ein substituiertes Pyrrolid der allgemeinen Struktur 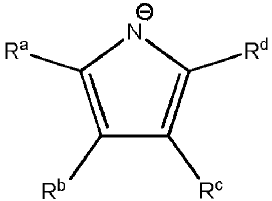
worin R^{a} - R^{d} unabhängig voneinander ausgewählt sind aus H, C1-C4-Alkyl, C1-C4-Alkoxy, Aryl, Aryloxy, Dialkylamino, Diarylamino, Halogen, Trifluormethyl, Cyano, Nitro, Sulfonyl und Sulfinyl;
Y ausgewählt ist aus C1-C6-Alkoxy und C1-C10-Aryloxy, die beide mit Alkoxy, Aryloxy, Dialkylamino, Diarylamino, Halogen, Trifluormethyl, Cyano, Nitro, Sulfonyl und Sulfinyl substituiert sein können;
R¹ ausgewählt ist aus H, C1-C12-Alkyl und 5-bis 18-gliedrigem Aryl, die beide mit einem oder mehreren C1-C12-Alkyl-, 5- bis 18-gliedrigen Aryl-, C1-C12-Alkyloxy-, Di(C1-C4-alkyl)amino-, Halogen-, Trifluormethyl-, Cyano- und Nitro-Resten substituiert sein können;
R² ausgewählt ist aus C1-C12-Alkyl und 5- bis 18-gliedrigem Aryl, wobei beide mit einem oder mehreren von C1-C12-Alkyl-, 5- bis 18-gliedrigen Aryl-, C1-C12-Alkyloxy-, Di(C1-C4-alkyl)amino-, Halogen-, Trifluormethyl-, Cyano-, Nitro-Resten substituiert sein können;
R³ ausgewählt ist aus C1-C12-Alkyl und 5- bis 18-gliedrigem Aryl, die beide mit einem oder mehreren C1-C12-Alkyl-, 5- bis 18-gliedrigen Aryl-, C1-C12-Alkoxy-, Di (C1-C4-alkyl)amino-, Halogen-, Trifluormethyl-, Cyano- und Nitro-Resten substituiert sein können; und
R⁴-R¹¹ unabhängig voneinander ausgewählt sind aus H, C1-C4-Alkyl und Halogen;
wobei "Alkyl" und "Alkoxy" Fälle einschließen, in denen die Alkyleinheit linear, verzweigt oder Cycloalkyl ist, und "Aryl" Heteroeinheiten einschließt.

2. Verbindung nach Anspruch 1, worin
in X, R^{b} und R^{c} H sind, und R^{a} und R^{d} unabhängig voneinander ausgewählt sind aus H, Methyl und Phenyl;
R¹ und R² ausgewählt sind aus H, C1-C5-Alkyl und 5- bis 10-gliedrigem Aryl, das mit einem oder mehreren von C1-C4-Alkyl, Halogen und Trifluormethyl substituiert sein kann, mit der Maßgabe, dass nur eines von R¹ und R² H sein kann;
R³ ausgewählt ist aus C1-C5-Alkyl und 5- bis 10-gliedrigem Aryl, wobei beide mit einem oder mehreren von C1-C4-Alkyl, 5- bis 10-gliedrigem Aryl und C1-C4-Alkoxy substituiert sein können; und
R⁴-R¹¹ unabhängig voneinander ausgewählt sind aus H, C1-C4-Alkyl und Halogen.

3. Verbindung nach Anspruch 2, in welcher
in X, R^{b} und R^{c} H sind, und R^{a} und R^{d} beide Methyl oder beide Phenyl sind;
R¹ und R² so ausgewählt sind, dass eines von ihnen H ist und das andere ausgewählt ist aus C1-C5-Alkyl und 5- bis 10-gliedrigem Aryl, das mit einem oder mehreren von C1-C4-Alkyl, Halogen und Trifluormethyl substituiert sein kann;
R³ ausgewählt ist aus C1-C5-Alkyl und 5- bis 10-gliedrigem Aryl, das mit einem oder mehreren von C1-C4-Alkyl, 5- bis 10-gliedrigem Aryl, C1-C4-Alkoxy, Halogen und Trifluormethyl substituiert sein kann;
R⁴-R¹¹ Wasserstoff sind.

4. Verbindung nach Anspruch 1, ausgewählt aus Verbindungen der Formeln III bis VI:

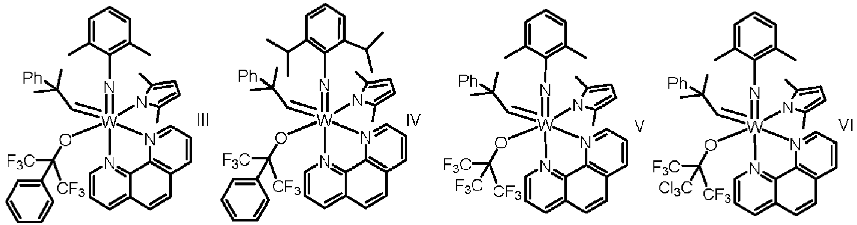

5. Verbindung nach Anspruch 1, ausgewählt aus Verbindungen der Formeln III bis V:

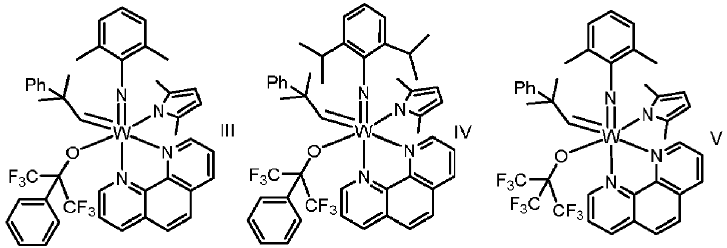

6. Verwendung einer Verbindung nach Anspruch 1 bei der Herstellung eines Polymers von Dicyclopentadien.

## Revendications

1. Composé de formule II 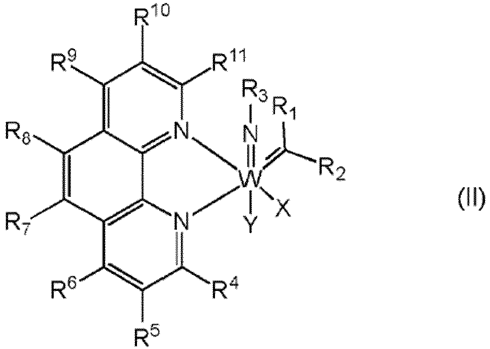
où X est un pyrrolide substitué de structure générale 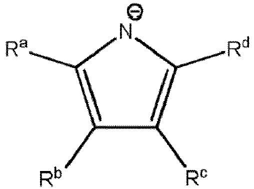
où R^{a}-R^{d} sont indépendamment choisis parmi H, alkyle en C1-C4, alcoxy en C1-C4, aryle, aryloxy, dialkylamino, diaryl-amino, halogène, trifluorométhyle, cyano, nitro, sulfonyle et sulfinyle ;
Y est choisi parmi un alcoxy en C1-C6 et un aryloxy en C1-C10, qui tous deux peuvent être substitués par un groupe alcoxy, aryloxy, dialkylamino, diarylamino, halogène, trifluorométhyle, cyano, nitro, sulfonyle et sulfinyle ;
R¹ est choisi parmi H, un alkyle en C1-C12 et un aryle ayant de 5 à 18 chaînons, qui tous deux peuvent être substitués par un ou plusieurs radicaux alkyle en C1-C12, aryle ayant de 5 à 18 chaînons, alkyloxy en C1-C12, di(alkyl-en C1-C4)amino, halogène, trifluorométhyle, cyano et nitro ;
R² est choisi parmi un alkyle en C1-C12 et un aryle ayant de 5 à 18 chaînons, qui tous deux peuvent être substitués par un ou plusieurs radicaux alkyle en C1-C12, aryle ayant de 5 à 18 chaînons, alkyloxy en C1-C12, di(alkyl-en C1-C4)amino, halogène, trifluorométhyle, cyano, nitro ;
R³ est choisi parmi un alkyle en C1-C12 et un aryle ayant de 5 à 18 chaînons, qui tous deux peuvent être substitués par un ou plusieurs radicaux alkyle en C1-C12, aryle ayant de 5 à 18 chaînons, alcoxy en C1-C12, di(alkyl-en C1-C4)amino, halogène, trifluorométhyle, cyano et nitro ; et
R⁴-R¹¹ sont indépendamment choisis parmi H, un alkyle en C1-C4 et un halogène,
où « alkyle » et « alcoxy » englobent les cas où l'entité alkyle est linéaire, ramifiée ou cycloalkyle, et « aryle » englobe les entités hétéroaryle.

2. Composé selon la revendication 1, dans lequel :
- dans X, R^{b} et R^{c} sont H et R^{a} et R^{d} sont indépendamment choisis parmi H, méthyle et phényle ;
- R¹ et R² sont choisis parmi H, un alkyle en C1-C5 et un aryle ayant de 5 à 10 chaînons, qui peuvent être substitués par un ou plusieurs alkyle en C1-C4, halogène et trifluorométhyle, à condition qu'un seul des R¹ et R² puisse être H ;
- R³ est choisi parmi un alkyle en C1-C5 et un aryle ayant de 5 à 10 chaînons, qui tous deux peuvent être substitués par un ou plusieurs alkyle en C1-C4, aryle ayant de 5 à 10 chaînons, et alcoxy en C1-C4 ; et
- R⁴-R¹¹ sont indépendamment choisis parmi H, un alkyle en C1-C4 et un halogène.

3. Composé selon la revendication 2, dans lequel
- dans X, R^{b} et R^{c} sont H et R^{a} et R^{d} sont tous deux méthyle ou tous deux phényle ;
- R¹ et R² sont choisis de façon que l'un d'entre eux soit H et que l'autre soit choisi parmi un alkyle en C1-C5 et un aryle ayant de 5 à 10 chaînons, qui peuvent être substitués par un ou plusieurs alkyle en C1-C4, halogène et trifluorométhyle ;
- R³ est choisi parmi un alkyle en C1-C5 et un aryle ayant de 5 à 10 chaînons, qui peuvent être substitués par un ou plusieurs alkyle en C1-C4, aryle ayant de 5 à 10 chaînons, alcoxy en C1-C4, halogène et trifluoro-méthyle ;
- R⁴-R¹¹ sont hydrogène.

4. Composé selon la revendication 1, choisi parmi les composés de Formules III-VI :

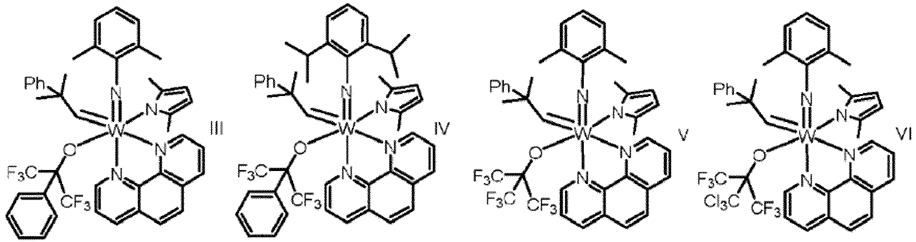

5. Composé selon la revendication 1, choisi parmi les composés de Formules III—V :

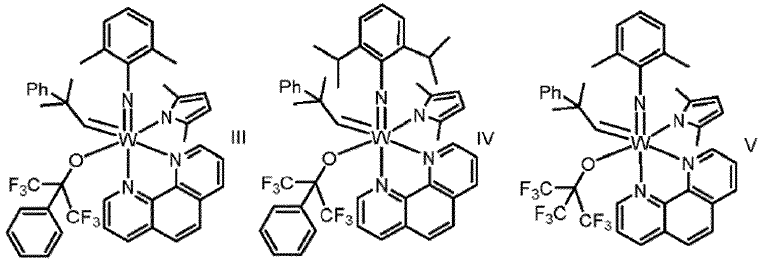

6. Utilisation d'un composé selon la revendication 1 dans la préparation d'un polymère de dicyclopentadiène.
